# EUROPÄISCHE PATENTSCHRIFT

(11) **EP 3 464 124 B1**
(45) Veröffentlichungstag und Bekanntmachung des Hinweises auf die Patenterteilung: **29.07.2020**
(21) Anmeldenummer: 17727826.4
(22) Anmeldetag: 23.05.2017
(51) Int. Cl.: B65G 1/00, G01B 11/24

(54) **ÜBERGABE MIT KONTURENKONTROLLE**
TRANSFER WITH CONTOUR CHECKING
TRANSFERT À CONTRÔLE DE CONTOURS

(30) Priorität: 24.05.2016 DE 102016208995
(43) Veröffentlichungstag der Anmeldung: 10.04.2019
(73) Patentinhaber: Jungheinrich Aktiengesellschaft, 22047 Hamburg (DE)
(72) Erfinder: ZITZMANN, Susanne, 81669 München (DE); ERKENBRECHER, John, 85356 Freising (DE); MARTINEZ, Ramiro, 93133 Burglengenfeld (DE)
(74) Vertreter: Weickmann & Weickmann PartmbB
(86) Internationale Anmeldenummer: PCT/EP2017/062380
(87) Internationale Veröffentlichungsnummer: WO 2017/202832

(56) Entgegenhaltungen:
- DD-A1- 119 999
- DE-A1-102014 111 656
- DE-U1- 29 519 466
- JP-A- H08 301 449
- JP-A- 2001 294 303
- JP-A- 2001 317 911
- JP-A- 2003 097 918
- JP-A- 2011 042 498

## Beschreibung

Die vorliegende Erfindung betrifft eine Anordnung zur Konturenkontrolle von in ein Regalsystem einzulagernden Paletten sowie ein Regalsystem, umfassend eine derartige Anordnung.

Beim Einlagern von Paletten in Regalsysteme, insbesondere in automatische oder halbautomatische Regalsysteme, ist es von entscheidender Bedeutung, dass die entsprechenden Paletten sowie die von den Paletten getragenen Objekte sich vollständig innerhalb einer vordefinierten Kontur befinden. Sollte diese Kontur nämlich nicht eingehalten sein, besteht die Gefahr, dass die Paletten oder die von den Paletten getragenen Objekte mit Komponenten des Regalsystems oder anderen Paletten kollidieren, was zu erheblichen Schäden und Ausfallzeiten führen könnte.

Es ist ferner wünschenswert, dass die Konturenkontrolle möglichst nah am Einlagerort, d. h. am Regal, erfolgt, um zuverlässig sicherzustellen, dass sich bis zum eigentlichen Einlagern die Kontur nicht mehr ändern wird. Es ist ebenfalls wünschenswert, dass entsprechende Systeme zur Konturenkontrolle in bestehenden Regalsystemen nachgerüstet werden können und dass insbesondere keine Modifikationen an bestehenden Flurförderzeugen und automatisierten Komponenten von Regalsystemen vorgenommen werden müssen.

Es ist zu diesem Zweck beispielsweise aus der DE 10 2014 111 656 A1 eine Vorrichtung nach dem Oberbegriff des Anspruchs 1 zur kamerabasierten Konturenkontrolle von Objekten, wie beispielsweise beladenen Paletten, bekannt, in der die zu überprüfenden Objekte auf ein Förderband aufgesetzt werden und auf diesem durch einen mit Kameras versehenen Konturrahmen transportiert werden, wobei mittels der Kameras die Kontur des Objekts in drei Dimensionen überprüft wird.

Diese aus dem Stand der Technik bekannte Vorrichtung zur Konturenkontrolle ist allerdings relativ teuer und nimmt einen erheblichen Bauraum ein, der sich insbesondere bei Neuerrichtung von Regallagern ebenfalls in den Kosten niederschlagen wird. Ferner sind derartige Vorrichtungen in bereits bestehenden Regallagern ebenfalls aufgrund ihrer relativ hohen Baugröße nicht oder nur schwerlich nachzurüsten.

Es ist daher Aufgabe der vorliegenden Erfindung, die eben genannten Nachteile von bekannten Vorrichtungen zur Konturenkontrolle auszuräumen und insbesondere eine Anordnung bereitzustellen, die relativ preisgünstig ist, einen verminderten Platzbedarf aufweist und verhältnismäßig einfach in bestehenden Regalsystemen nachrüstbar ist.

Hierzu umfasst eine erfindungsgemäße Anordnung zur Konturenkontrolle von in ein Regalsystem einzulagernden Paletten einen Palettenübergabeplatz, welcher dazu eingerichtet ist, in das Regalsystem einzulagernde Paletten aufnehmen zu können; wenigstens eine Sensoreinrichtung, welche dazu eingerichtet ist, zu erfassen, ob eine auf dem Palettenübergabeplatz aufstehende Palette sowie von der Palette getragene Objekte sich vollständig innerhalb einer vordefinierten Kontur befinden; und eine Ausgabeeinheit, welche mit der Sensoreinheit betriebsmäßig gekoppelt und dazu eingerichtet ist, das Erfassungsergebnis auszugeben.

In der erfindungsgemäßen Anordnung wird somit die Kontrolle der Kontur der Palette und der darauf befindlichen Objekte in einem Zustand durchgeführt, in dem die Palette ortsfest auf einem Palettenübergabeplatz aufsteht. Auf diese Weise kann auf das im Stand der Technik benötigte Förderband vollständig verzichtet werden, wodurch sich deutliche Ersparnisse, sowohl was den Bauraum der Vorrichtung als auch ihre Kosten betrifft, ergeben. Es sei an dieser Stelle darauf hingewiesen, dass der Begriff "Palette" nicht nur streng im Sinne von Euro-Paletten und Ähnlichem verstanden werden soll, sondern letztlich sämtliche Gegenstände umfassen kann, die von einem Flurförderzeug transportiert und in einem Regalsystem eingelagert werden können.

Zur eigentlichen Kontrolle der Kontur der Palette und der von ihr getragenen Objekte ist in der erfindungsgemäßen Anordnung die wenigstens eine Sensoreinrichtung bezüglich des Palettenübergabeplatzes derart positioniert und eingerichtet, dass ein möglicher Überstand über die vordefinierte Kontur hinaus festgestellt werden kann.

Hierzu kann die Sensoreinrichtung wenigstens eine Lichtschranke oder/und wenigstens eine Kamera, beispielsweise eine 3D-Kamera, umfassen. Insbesondere kann an bekannte Lichtschranken gedacht werden, die in einer oder zwei Dimensionen eine Durchbrechung ihres voreingestellten Lichtpfades oder einer entsprechenden voreingestellten Ebene erfassen können. Andererseits kann durch moderne Kamerasysteme, wie beispielsweise Stereokameras, ein dreidimensionales Bild von der Palette und den von ihr getragenen Objekten erzeugt werden, das mittels Mustererkennungsalgorithmen dann auf Einhaltung der vorbestimmten Kontur überprüft werden kann. Es versteht sich, dass die Sensoreinrichtung weitere Komponenten zur Verarbeitung und Weitergabe der anfallenden Daten umfassen kann.

Insbesondere kann die vordefinierte Kontur in Draufsicht auf die Palette durch ein Polygon, wie beispielsweise ein Rechteck, und ggf. zusätzlich eine vorbestimmte zulässige Höhe der Palette und der von der Palette getragenen Objekte, gebildet sein. Weiter insbesondere kann das genannte Rechteck im Falle klassischer Paletten, wie beispielsweise normierter Euro-Paletten, durch die Außenabmessungen des Palettenkörpers selbst gegeben sein, d. h. dass ein Überstand von auf der Palette getragenen Objekten über den Umriss des Palettenkörpers selbst nicht zulässig ist, wobei unter Umständen zu erlaubende Toleranzen geeignet gewählt werden können.

Ferner kann die erfindungsgemäße Anordnung Mittel zum Erfassen des Gewichts der Palette oder/und des Brettfreiraums der Palette umfassen, welche Mittel ebenfalls mit der Ausgabeeinheit betriebsmäßig gekoppelt sein können. Für diese zusätzliche optionale Funktionalität können an sich bekannte Erfassungsmittel vorgesehen sein, wie beispielsweise elektronische Waagen und Ähnliches.

In der erfindungsgemäßen Anordnung ist dem Palettenübergabeplatz ein Zentrierrahmen zugeordnet, welcher ein in Richtung einer Aufstellfläche für die Palette zulaufendes Profil aufweist. Durch das zusätzliche Vorsehen des Zentrierrahmens wird sichergestellt, dass sich die Palette bezüglich der wenigstens einen Sensoreinrichtung in einer vorbestimmten Position und Orientierung befindet, was eine höhere Position der Konturenkontrolle ermöglicht und somit den Einsatz einer weniger aufwändigen Sensoreinrichtung ermöglichen kann. In einem besonders einfachen Ausführungsbeispiel kann der Zentrierrahmen an seiner Unterseite im Wesentlichen die Ausmaße des für das Regalsystem vorgesehenen Palettentyps aufweisen und nach oben hin trichterförmig auseinanderlaufen, um so ein Einsetzen der Palette von oben auf die Aufstellfläche mittels eines Flurförderzeugs oder Ähnlichem zu erlauben, wobei die Trichterform dafür sorgen wird, dass die Palette in der für sie vorgesehenen Position auf der Aufstellfläche zum Aufliegen kommen wird.

In einer Ausführungsform kann die erfindungsgemäße Anordnung eine optische Ausgabevorrichtung umfassen, die dazu eingerichtet ist, einem Bediener der Anordnung, wie beispielsweise dem Fahrer eines Flurförderzeugs, mittels welchem eine Palette auf die erfindungsgemäße Anordnung aufgestellt wird, das Erfassungsergebnis der Sensoreinheit anzuzeigen, wobei die optische Ausgabevorrichtung vorzugsweise unterhalb des Palettenübergabeplatzes angeordnet sein kann, um eine freie Sicht des Bedieners auf die Ausgabevorrichtung sicherzustellen.

Hierbei kann im einfachsten Fall an eine "digitale" Ausgabe, beispielsweise umfassend eine grüne und eine rote Lampe, gedacht werden, die dem Bediener lediglich symbolisiert, ob die vordefinierte Kontur durch die Palette und die darauf getragenen Objekte eingehalten ist oder nicht. In einer Weiterbildung kann beispielsweise aber zusätzlich auch eine Anzeige vorgesehen sein, die dem Bediener die Position eines Überstands über die vordefinierte Kontur anzeigt, beispielsweise in Form von vier weiteren Lampen, die dementsprechend für "vorne", "hinten", "links" und "rechts" stehen. Alternativ oder zusätzlich können auch noch weitere Ausgabevorrichtungen vorgesehen werden, wie beispielsweise akustische Ausgabevorrichtungen, die mittels eines oder mehrerer vordefinierter Geräusche den Fahrer darüber informieren, ob die vordefinierte Kontur eingehalten ist oder nicht.

Alternativ oder zusätzlich kann die Ausgabevorrichtung das Erfassungsergebnis auch direkt an ein übergeordnetes Datenverarbeitungssystem weitergeben, insbesondere im Kontext der im Folgenden beschriebenen Regalsysteme.

Gemäß einem zweiten Aspekt betrifft die vorliegende Erfindung ein Regalsystem, umfassend wenigstens eine Regalreihe und wenigstens ein Regalbediengerät sowie wenigstens eine erfindungsgemäße Anordnung zur Konturenkontrolle, deren Palettenübergabeplatz derart eingerichtet ist, dass von außerhalb des Regalsystems Paletten auf ihm ablegbar sind, welche anschließend von dem Regalbediengerät zur Einlagerung in die wenigstens eine Regalreihe aufnehmbar sind.

In derartigen automatischen Regalsystemen findet eine strikte Trennung zwischen einem Außenbereich und einem Automatikbereich statt, wobei zur Einlagerung und Auslagerung von Paletten in den bzw. aus dem Automatikbereich dedizierte Übergabeplätze vorgesehen sind, von welchen einzulagernde Paletten von dem Regalbediengerät übernommen werden bzw. auf welchen auszulagernde Paletten von dem Regalbediengerät positioniert werden.

Erfindungsgemäß wird somit die Konturenkontrolle an eben jenen Palettenübergabeplätzen für einzulagernde Paletten vorgenommen. Hierdurch wird nicht nur in platzsparender Weise der ohnehin notwendige Palettenübergabeplatz gleichzeitig zur Konturenkontrolle verwendet, sondern es können auch bereits bestehende Regalsysteme relativ einfach mit einer erfindungsgemäßen Anordnung zur Konturenkontrolle nachgerüstet werden, indem an ihren Palettenübergabeplätzen erfindungsgemäße Anordnungen zur Konturenkontrolle installiert werden.

Des Weiteren ergibt sich hierdurch der Vorteil, dass durch das Vornehmen der Konturenkontrolle unmittelbar vor dem Automatikbereich des Regalsystems auf eine weitere Konturenkontrolle auf dem Regalbediengerät oder direkt beim Einlagern verzichtet werden kann. Somit können Paletten mit nicht geeigneten Konturen direkt nach dem Aufsetzen auf den Palettenübergabeplatz erkannt und wieder aussortiert und abtransportiert werden, ohne dass an irgendeiner Stelle in den Automatikbetrieb des Regalsystems eingegriffen werden müsste.

Vorzugsweise kann in einem erfindungsgemäßen Regalsystem der Palettenübergabeplatz an einem Kragarm an einem Längsende der wenigstens einen Regalreihe vorgesehen sein, welcher Kragarm vorzugsweise eine Verlängerung einer Regalauflage bildet. Ein derartiges Vorsehen des Palettenübergabeplatzes an einem Kragarm erlaubt einerseits einen einfachen Zugriff auf die Palette durch sowohl das anliefernde Flurförderzeug als auch das Regalbediengerät und andererseits eine geeignete Abstützung des Gewichts der auf dem Palettenübergabeplatz aufstehenden Palette.

Erfindungsgemäß können mehrere Palettenübergabeplätze in einem erfindungsgemäßen Regalsystem vorgesehen sein, insbesondere an übereinander angeordneten Kragarmen an einem Längsende einer einzelnen Regalreihe. Durch diese bauliche Maßnahme wird der mögliche Durchsatz von einzulagernden Paletten maximiert.

Hierbei kann jedem aus der Mehrzahl von Palettenübergabeplätzen eine jeweilige optische Ausgabevorrichtung zugeordnet sein. Diese optischen Ausgabevorrichtungen können beispielsweise im Falle einer Mehrzahl von übereinander angeordneten Palettenübergabeplätzen sämtlich unterhalb des untersten der Palettenübergabeplätze angeordnet sein. Alternativ kann auch eine einzelne optische Ausgabevorrichtung für die Mehrzahl von Palettenübergabeplätzen vorgesehen sein, wobei dann allerdings mittels zusätzlicher Mittel sichergestellt werden muss, dass die momentane Ausgabe der optischen Ausgabevorrichtung mit der Erfassung der Sensoreinrichtung des gerade bedienten Palettenübergabeplatzes übereinstimmt.

Insbesondere kann in einem erfindungsgemäßen Regalsystem ein erster Typ von Regalreihe vorgesehen sein, welcher an einem Längsende wenigstens einen Palettenübergabeplatz für einzulagernde Paletten umfasst, sowie ein zweiter Typ von Regalreihe, welcher an einem entsprechenden Längsende wenigstens einen Palettenübergabeplatz für auszulagernde Paletten umfasst, wobei vorzugsweise abwechselnd Regalreihen vom ersten und zweiten Typ angeordnet sind. Durch eine derartige Anordnung der beiden Typen von Regalreihen können die Arbeitsabläufe im Automatikbereich des Regalsystems optimiert werden, da zwischen den Reihen bewegliche Regalbediengeräte nach einem Auslagern einer Palette direkt eine zur Einlagerung vorgesehene Palette von einem gegenüberliegenden Palettenübergabeplatz übernehmen können.

In einer Weiterbildung kann in einem erfindungsgemäßen Regalsystem die Ausgabeeinheit betriebsmäßig mit einem übergeordneten Lagerverwaltungssystem gekoppelt sein, wodurch eine Integration der erfindungsgemäßen Anordnung zur Konturenkontrolle in den Gesamtkontext des automatischen Lagerverwaltungssystems erzielt werden kann. Hierdurch kann beispielsweise automatisch sichergestellt werden, dass eine Übernahme einer einzulagernden Palette durch das Regalbediengerät nur erfolgt, wenn die Palette die Konturenkontrolle passiert hat. Andererseits könnte die Integration der erfindungsgemäßen Konturenkontrolle auch derart geschehen, dass ein Bediener die einzulagernde Palette händisch für das Regalbediengerät freigibt, beispielsweise mittels einer an seinem Flurförderzeug vorgesehenen Eingabevorrichtung, wenn er durch die Ausgabeeinheit das Signal bekommen hat, dass die vordefinierte Kontur von der entsprechenden Palette eingehalten ist.

Weitere Merkmale und Vorteile der vorliegenden Erfindung werden aus der nachfolgenden Beschreibung deutlich, wenn diese zusammen mit den beiliegenden Figuren betrachtet wird. Diese zeigen im Einzelnen:
Figur 1 eine schematische Draufsicht auf eine erfindungsgemäße Anordnung zur Konturenkontrolle;
Figur 2 eine schräge Draufsicht auf einen in einer erfindungsgemäßen Anordnung verwendbaren Zentrierrahmen;
Figuren 3a und 3b eine Ausführungsform einer in einer erfindungsgemäßen Anordnung verwendbaren optischen Ausgabevorrichtung;
Figur 4 eine schematische Seitenansicht einer Regalreihe eines erfindungsgemäßen Regalsystems mit einer Mehrzahl von übereinander angeordneten Palettenübergabeplätzen; und
Figur 5 eine schematische Draufsicht auf zwei benachbarte Regale eines erfindungsgemäßen Regalsystems.
Figur 6 eine Draufsicht auf ein weiteres Ausführungsbeispiel einer erfindungsgemäßen Anordnung zur Konturenkontrolle.

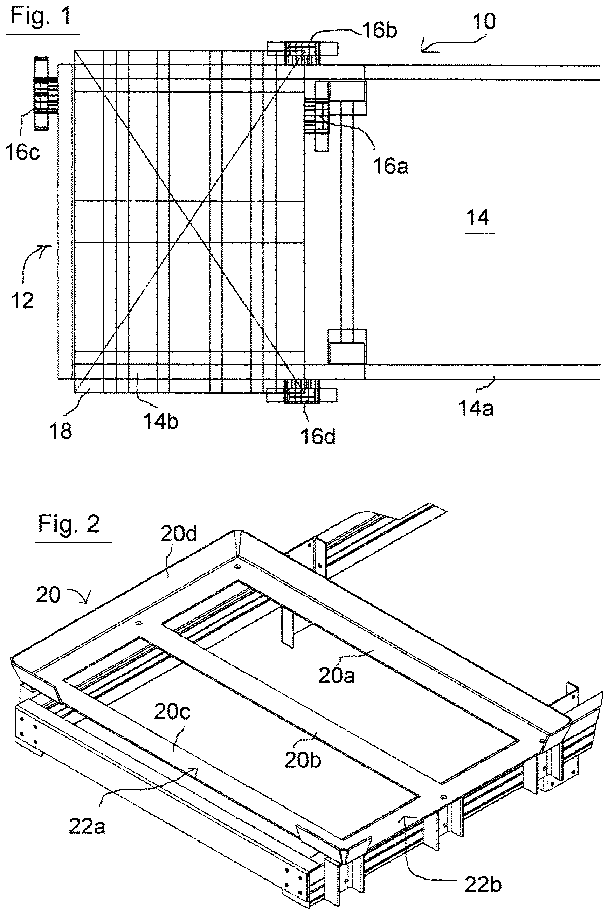

In Figur 1 ist eine erfindungsgemäße Anordnung zur Konturenkontrolle in schematischer Draufsicht gezeigt und ganz allgemein mit dem Bezugszeichen 10 bezeichnet. Sie umfasst einen Palettenübergabeplatz 12, der an einem Ende einer Regalreihe 14 an einem Kragarm 14b in der Verlängerung einer Regalauflage 14a vorgesehen ist. Des Weiteren umfasst die Anordnung eine Sensoreinrichtung, die wiederum vier Lichtschranken 16a-16d umfasst.

Auf dem Palettenübergabeplatz 12 steht in Figur 1 eine Palette 18 auf, an der mittels der Lichtschranken 16a-16d eine Konturenkontrolle durchgeführt wird. Hierzu spannen die Lichtschranken 16a-16d einen dreidimensionalen Raum auf, der eine vordefinierte Kontur bildet, innerhalb derer sich die Palette 18 zu befinden hat, um die Konturenkontrolle erfolgreich passieren zu können. Die einzelnen Sensoren 16a-16d sind hierbei oberhalb des Palettenübergabeplatzes im Bereich eines nicht gezeigten Kragarms einer zweiten Regalauflage angeordnet, die sich über der gezeigten Regalauflage 14a befindet.

Figur 2 zeigt nun einen Zentrierrahmen 20, der die eigentliche Aufstellfläche für die Palette an dem Palettenübergabeplatz 12 aus Figur 1 bildet. Hierzu umfasst der Zentrierrahmen 20 drei horizontale, an ihren Längsenden verbundene parallele Balken 20a-20c, mittels derer die genannte Aufstellfläche gebildet ist und durch die eine geeignete Gewichtsverteilung des Gewichts der darauf aufstehenden Palette sichergestellt werden kann. Des Weiteren umfasst der Zentrierrahmen 20 einen trichterförmigen umlaufenden Vorsprung 20d, der von den Rändern der durch die parallelen Balken 20a-20c und ihre Verbindungen gebildeten Aufstellfläche schräg nach oben und außen vorsteht.

Der trichterförmige Vorsprung 20d weist hierbei an einer Längsseite des Zentrierrahmens 20 eine erste Durchbrechung 22a und an einer Breitenseite des Zentrierrahmens 20 eine zweite Durchbrechung 22b auf. Die erste Durchbrechung 22a ist dazu vorgesehen, dass von dieser Seite her durch ein Flurförderzeug eine Palette in den Zentrierrahmen eingesetzt werden kann, wobei die Ausnehmung 22a dazu vorgesehen ist, der Gabel des Flurförderzeugs das Absetzen der Palette zu ermöglichen. In ähnlicher Weise ist die zweite Durchbrechung 22b dazu vorgesehen, dass von der Breitseite des Zentrierrahmens 20 her ein Regalbediengerät die in dem Zentrierrahmen aufstehende Palette nach erfolgter Konturenkontrolle übernehmen kann, um sie anschließend in das Regalsystem einzulagern.

Bei einem Absetzen der Palette in einem Zentrierrahmen 20, der wie angesprochen als Palettenübergabeplatz dient, wird durch die trichterförmige Ausbildung des Vorsprungs 20d erreicht, dass die Palette der Schwerkraft folgend das trichterförmige Profil hinabgleiten kann und exakt an der für sie vorbestimmten Position zum Aufstehen kommen wird. Hierdurch kann die anschließende Konturenkontrolle mit hoher Präzision durchgeführt werden, da die Position der zu erfassenden Palette sehr genau festgelegt und bekannt ist.

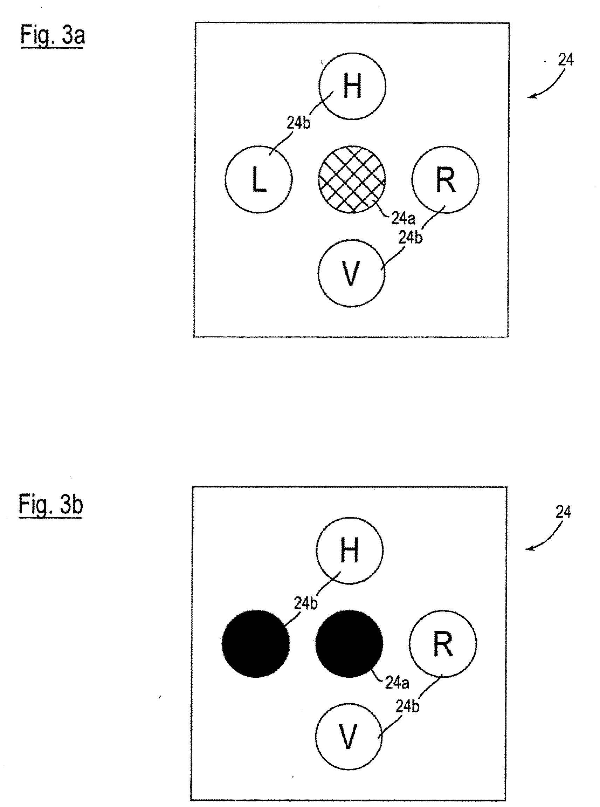

Die Figuren 3a und 3b zeigen nun eine mögliche Ausführungsform einer optischen Ausgabevorrichtung einer erfindungsgemäßen Anordnung zur Konturenkontrolle, die jeweils ganz allgemein mit dem Bezugszeichen 24 bezeichnet ist.

Die optische Ausgabevorrichtung 24 kann beispielsweise unterhalb des Palettenübergabeplatzes 12 aus Figur 1 derart angeordnet sein, dass ein Fahrer eines Flurförderzeugs, mittels welchem eine Palette auf den Palettenübergabeplatz 12 aufgestellt wird, eine freie Sicht darauf hat. Es umfasst einerseits in zentraler Position ein erstes Element 24a, welches zwei verschiedenfarbige Lampen umfasst und nach Art einer Ampel in dem in Figur 3a gezeigten ersten Zustand grün leuchtet (durch Schraffierung angedeutet), um zu signalisieren, dass die auf dem Palettenübergabeplatz aufstehende Palette sich vollständig innerhalb der vordefinierten Kontur befindet, während in dem unten gezeigten zweiten Zustand das Element 24a rot leuchtet (durch Auffüllung angedeutet), um zu signalisieren, dass die auf dem Palettenübergabeplatz aufstehende Palette an wenigstens einer Seite über die vordefinierte Kontur übersteht bzw. diese durchbricht.

Zur Vereinfachung der Lokalisierung des Überstands der Palette aus der Kontur ist ferner das zweite Anzeigeelement 24b vorgesehen, das mit insgesamt vier Lampen ausgerüstet ist, die mit den Buchstaben L, H, R und V bezeichnet sind, was im Einzelnen jeweils für "links", "hinten", "rechts" und "vorne" steht. In dem in Figur 3b gezeigten Zustand durchbricht die auf dem Palettenübergabeplatz aufstehende Palette die vordefinierte Kontur auf der linken Seite, so dass die mit L bezeichnete Lampe zusammen mit der ersten Element 24a rot aufleuchtet. Das zweite Element 24b wird dem Bediener der erfindungsgemäßen Anordnung das Auffinden des Überstands der Palette deutlich erleichtern, so dass auch das Beheben des Überstands schneller vonstatten gehen kann.

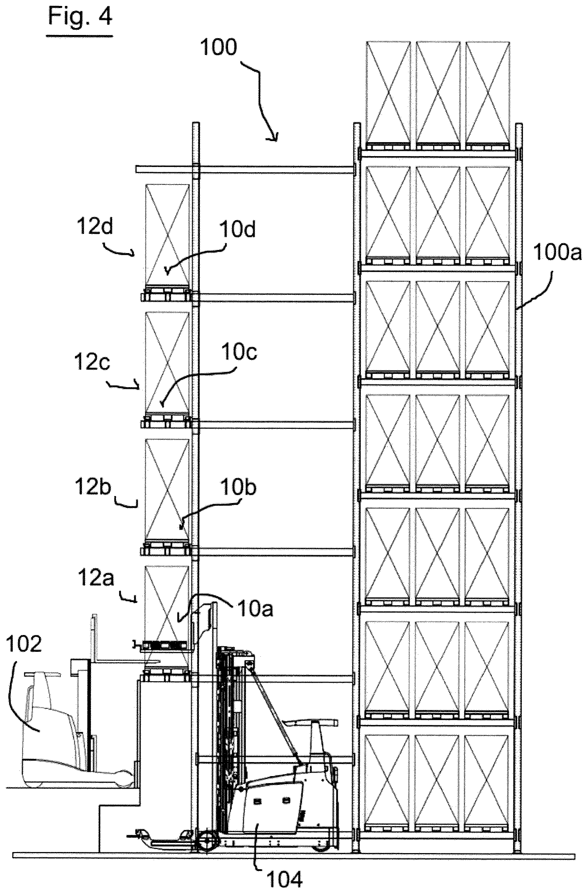

In Figur 4 ist nun schematisch in Seitenansicht eine Regalreihe eines erfindungsgemäßen Regalsystems sowie ein Flurförderzeug, das einzulagernde Paletten anliefert, und ein Regalbediengerät, das die angelieferten Paletten einlagert, gezeigt. Hierbei ist das Regalsystem als Ganzes mit dem Bezugszeichen 100, das Flurförderzeug mit dem Bezugszeichen 102 und das Regalbediengerät, das seinerseits einen Teil des Regalsystems bildet, mit dem Bezugszeichen 104 bezeichnet.

Wie ebenfalls zu erkennen ist, befinden sich an dem Stirnende der einen Teil des Regalsystems 100 bildenden Regalreihe 100a vier Palettenübergabeplätze 12a-12d, die jeweils Teil einer erfindungsgemäßen Anordnung zur Konturenkontrolle 10a-10d sind, wobei aus Gründen der Übersichtlichkeit auf eine Darstellung der jeweiligen Sensoreinheiten verzichtet worden ist. Das Einlagern von Paletten läuft nun dermaßen ab, dass das Flurförderzeug 102 eine Palette von einem Wareneingang oder aus einem zwischengeschalteten Lager aufnimmt und auf einen der Palettenübergabeplätze 12a-12d absetzt. Auf diesem Palettenübergabeplatz wird dann mittels der jeweils zugeordneten Anordnung zur Konturenkontrolle 10a-10d durch die jeweiligen Sensoreinrichtungen die anhand von Figur 1 beschriebene Konturenkontrolle durchgeführt, wobei dem Fahrer des Flurförderzeugs 102 beispielsweise mittels mehrerer den jeweiligen Anordnungen 10a-10d zugeordneter Ausgabevorrichtungen vom Typ der in den Figuren 3a und 3b gezeigten, welche sich wie angesprochen unterhalb des untersten Palettenübergabeplatzes 12a befinden können, mitgeteilt wird, ob die jeweilige Palette die Konturenkontrolle erfolgreich besteht oder ob ein unzulässiger Überstand vorliegt.

Je nach Ergebnis der Erfassung wird dann die Palette für die Einlagerung in das Regalsystem 100 durch das Regalbediengerät 104 freigegeben oder muss vom Fahrer des Flurförderzeugs 102 wieder vom Palettenübergabeplatz 12a-12d abgenommen werden, damit der Überstand der Palette am Boden behoben werden kann. Hierbei kann die Freigabe der Palette zur Einlagerung durch das Regalbediengerät 104 entweder automatisch durch eine Weitergabe der Sensordaten von der Ausgabeeinheit der jeweiligen Anordnung zur Konturenkontrolle 10a-10d an ein übergeordnetes Lagerverwaltungssystem oder händisch durch den Fahrer des Flurförderzeugs 102 anhand des ihm von der optischen Ausgabevorrichtung angezeigten Erfassungsergebnisses der Sensoreinheit durchgeführt werden.

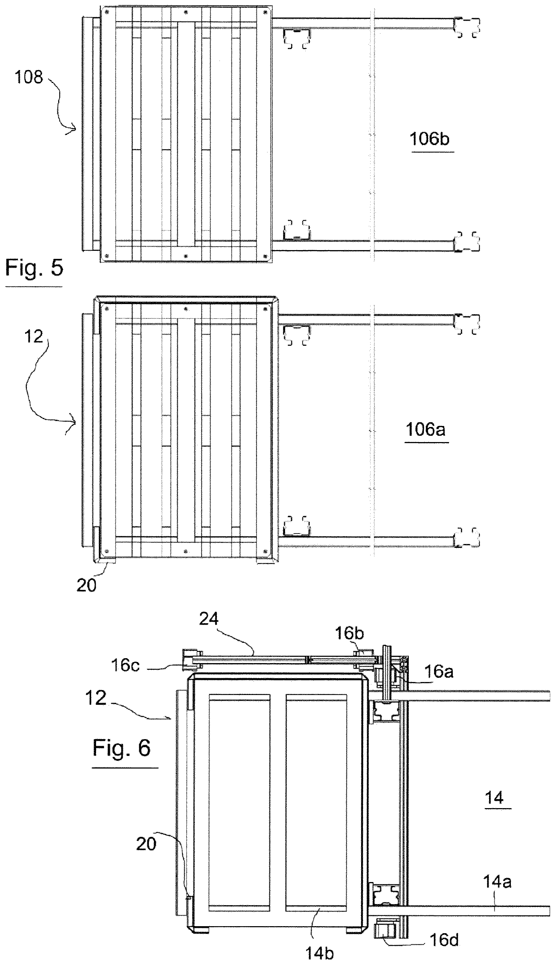

In Figur 5 sind zwei benachbarte Regalreihen des Regalsystems 100 aus Figur 4 in schematischer Draufsicht gezeigt und mit 106a und 106b bezeichnet. Hierbei ist der unten dargestellten Regalreihe 106a ein Palettenübergabeplatz 12 für einzulagernde Paletten zugeordnet, dem eine nicht gezeigte Anordnung zur Konturenkontrolle zugeordnet ist und der einen Zentrierrahmen 20, wie in Figur 2 gezeigt, umfasst. Im Gegensatz hierzu ist der oben dargestellten zweiten Regalreihe 106b ein Palettenübergabeplatz 108 für auszulagernde Paletten zugeordnet, bei dem auf den Zentrierrahmen 20 verzichtet worden ist, da an dieser Stelle zum Auslagern einer Palette diese nicht mit derselben Präzision positioniert werden muss wie dies zur oben beschriebenen Konturenkontrolle notwendig ist.

Indem jeweils benachbarte Regalreihen abwechselnd mit Palettenübergabeplätzen 12 für einzulagernde Paletten und Palettenübergabeplätzen 108 für auszulagernde Paletten angeordnet werden, können die Arbeitsabläufe in dem Automatikbereich des Regalsystems 100 derart optimiert werden, dass nach Auslagern einer Palette auf dem Palettenübergabeplatz 108 das in Figur 5 nicht gezeigte Regalbediengerät gleich anschließend aus dem direkt gegenüberliegenden Palettenübergabeplatz 12 eine einzulagernde Palette übernimmt. Auf diese Weise können die von dem Regalbediengerät zurückzulegenden Wege minimiert werden, was zu einer optimalen Ressourcennutzung führt.

Figur 6 zeigt eine gegenüber der Anordnung gemäß Figur 1 modifizierte Anordnung zur Konturenkontrolle einer Palette mit Ladung.

Merkmale, die funktional oder gegenständlich Merkmalen des oben erläuterten Ausführungsbeispiels entsprechen, sind in Figur 6 mit entsprechend korrespondierenden Bezugszeichen gekennzeichnet, so dass zur Erläuterung der Anordnung gemäß Figur 6 lediglich auf Unterschiede zu dem bereits beschriebenen Beispiel hinzuweisen ist. Bei dem Ausführungsbeispiel nach Figur 6 sind die Sensoren (Lichtschranken 16a-16d) nicht unmittelbar an dem Regal, sondern an einer gesonderten Halterungsvorrichtung 24 angebracht. Dies hat den Vorteil, dass beim Aufsetzen einer Palette auf den Kragarm 14b die Sensoren 16a-16d schwingungsmäßig von Kragarm 14b bzw. dem Regal weitgehend entkoppelt sind. Die Anordnung gemäß Figur 6 kann als Übergabeplatz 12 verwendet werden.

## Patentansprüche

1. Anordnung zur Konturenkontrolle von in ein Regalsystem einzulagernden Paletten (18), umfassend:
einen Palettenübergabeplatz (12), welcher dazu eingerichtet ist, in das Regalsystem einzulagernde Paletten (18) aufnehmen zu können;
wenigstens eine Sensoreinrichtung (16a-16d), welche dazu eingerichtet ist, zu erfassen, ob eine auf dem Palettenübergabeplatz (12) aufstehende Palette (18) sowie von der Palette (18) getragene Objekte sich vollständig innerhalb einer vordefinierten Kontur befinden; und
eine Ausgabeeinheit (24), welche mit der Sensoreinheit (16a-16d) betriebsmäßig gekoppelt und dazu eingerichtet ist, das Erfassungsergebnis auszugeben, **dadurch gekennzeichnet, dass** dem Palettenübergabeplatz (12) ein Zentrierrahmen (20) zugeordnet ist, welcher ein in Richtung einer Aufstellfläche (20a-20c) für die Palette trichterförmig zulaufendes Profil (20d) aufweist.

2. Anordnung nach Anspruch 1, wobei die Sensoreinrichtung (16a-16d) wenigstens eine Lichtschranke (16a-16d) oder/und wenigstens eine Kamera, beispielsweise eine 3d-Kamera, umfasst.

3. Anordnung nach einem der Ansprüche 1 und 2, wobei die vordefinierte Kontur in Draufsicht auf die Palette (18) durch ein Polygon, wie beispielsweise ein Rechteck, und gegebenenfalls eine vorbestimmte zulässige Höhe der Palette (18) und der von der Palette (18) getragenen Objekte gebildet ist.

4. Anordnung nach einem der vorhergehenden Ansprüche, wobei sie ferner Mittel zum Erfassen des Gewichts der Palette oder/und des Brettfreiraums der Palette (18) umfasst, welche Mittel ebenfalls mit der Ausgabeeinheit (24) betriebsmäßig gekoppelt sind.

5. Anordnung nach einem der vorhergehenden Ansprüche, wobei die Ausgabeeinheit (24) eine optische Ausgabevorrichtung umfasst, welche dazu eingerichtet ist, einem Bediener das Erfassungsergebnis der Sensoreinheit (16a-16d) anzuzeigen, und welche vorzugsweise unterhalb des Palettenübergabeplatzes (12) angeordnet ist.

6. Regalsystem, umfassend wenigstens eine Regalreihe (100a; 106a, 106b) und wenigstens ein Regalbediengerät (104) sowie wenigstens eine Anordnung zur Konturenkontrolle nach einem der vorhergehenden Ansprüche, deren Palettenübergabeplatz (12a-12d) derart eingerichtet ist, dass von außerhalb des Regalsystems Paletten auf ihm ablegbar sind, welche anschließend von dem Regalbediengerät (104) zur Einlagerung aufnehmbar sind.

7. Regalsystem nach Anspruch 6, wobei der Palettenübergabeplatz (12a-12d) an einem Kragarm an einem Längsende der wenigstens einen Regalreihe (100a; 106a) vorgesehen ist, welcher Kragarm vorzugsweise eine Verlängerung einer Regalauflage bildet.

8. Regalsystem nach Anspruch 6 oder 7, wobei eine Mehrzahl von Palettenübergabeplätzen (12a-12d) vorgesehen sind, insbesondere an übereinander angeordneten Kragarmen an einem Längsende einer einzelnen Regalreihe (100a; 106a).

9. Regalsystem nach Anspruch 8, wobei jedem der Mehrzahl von Palettenübergabeplätzen eine jeweilige optische Ausgabevorrichtung (24) zugeordnet ist.

10. Regalsystem nach Anspruch 9, wobei eine Mehrzahl von übereinander angeordneten Palettenübergabeplätzen (12a-12d) vorgesehen ist und die jeweiligen optischen Ausgabevorrichtungen (24) alle unterhalb des untersten Palettenübergabeplatzes (12a) angeordnet sind.

11. Regalsystem nach einem der Ansprüche 6 bis 10, wobei ein erster Typ von Regalreihe (106a) vorgesehen ist, welcher an einem Längsende wenigstens einen Palettenübergabeplatz (12) für einzulagernde Paletten umfasst, und ein zweiter Typ von Regalreihe (106b) vorgesehen ist, welcher an einem Längsende wenigstens einen Palettenausgabeplatz (108) für auszulagernde Paletten umfasst, und wobei vorzugsweise abwechselnd Regalreihen vom ersten (106a) und zweiten (106b) Typ angeordnet sind.

12. Regalsystem nach einem der Ansprüche 6 bis 11, wobei die Ausgabeeinheit (24) betriebsmäßig mit einem übergeordneten Lagerverwaltungssystem gekoppelt ist.

## Claims

1. Arrangement for checking the contour of pallets (18) to be stored in a rack system, comprising:
a pallet transfer station (12) which is designed to be able to receive pallets (18) to be stored in the rack system;
at least one sensor device (16a-16d) which is designed to detect whether a pallet (18) standing on the pallet transfer station (12) and objects carried by the pallet (18) are completely within a predefined contour; and
an output unit (24) which is operationally coupled to the sensor unit (16a-16d) and is designed to output the detection result, **characterised in that** a centring frame (20) is associated with the pallet transfer station (12), which frame has a profile (20d) which tapers in the manner of a funnel in the direction of a placement surface (20a-20c) for the pallet.

2. Arrangement according to claim 1, wherein the sensor device (16a-16d) comprises at least one light barrier (16a-16d) and/or at least one camera, for example a 3D camera.

3. Arrangement according to either claim 1 or claim 2, wherein the predefined contour, in plan view of the pallet (18), is formed by a polygon, such as a rectangle, and optionally a predetermined permissible height of the pallet (18) and of the objects carried by the pallet (18).

4. Arrangement according to any of the preceding claims, wherein it further comprises means for detecting the weight of the pallet and/or the board clearance of the pallet (18), which means are also operationally coupled to the output unit (24).

5. Arrangement according to any of the preceding claims, wherein the output unit (24) comprises an optical output apparatus which is designed to display the detection result of the sensor unit (16a-16d) to an operator and which is preferably arranged below the pallet transfer station (12).

6. Rack system comprising at least one rack row (100a; 106a, 106b) and at least one rack operating device (104) and at least one arrangement for contour checking according to any of the preceding claims, the pallet transfer station (12a-12d) of which is designed in such a way that pallets can be placed thereon from outside the rack system and can then be picked up by the rack operating device (104) for storage.

7. Rack system according to claim 6, wherein the pallet transfer station (12a-12d) is provided on a cantilever arm at one longitudinal end of the at least one rack row (100a; 106a), which cantilever arm preferably forms an extension of a rack support.

8. Rack system according to either claim 6 or claim 7, wherein a plurality of pallet transfer stations (12a-12d) is provided, in particular on cantilever arms arranged one above the other at one longitudinal end of a single rack row (100a; 106a).

9. Rack system according to claim 8, wherein each of the plurality of pallet transfer stations is associated with an optical output apparatus (24).

10. Rack system according to claim 9, wherein a plurality of pallet transfer stations (12a-12d) arranged one above the other is provided and the respective optical output apparatuses (24) are all arranged below the bottommost pallet transfer station (12a).

11. Rack system according to any of claims 6 to 10, wherein a first type of rack row (106a) is provided which comprises, at one longitudinal end, at least one pallet transfer station (12) for pallets to be stored, and a second type of rack row (106b) is provided which comprises, at one longitudinal end, at least one pallet output station (108) for pallets to be retrieved, and wherein rack rows of the first (106a) and second (106b) type are preferably arranged alternately.

12. Rack system according to any of claims 6 to 11, wherein the output unit (24) is operationally coupled to a superordinate warehouse management system.

## Revendications

1. Agencement pour le contrôle de contours de palettes (18) destinées à être stockées dans un système de rayonnage, comprenant :
une station de transfert de palettes (12) qui est adaptée pour pouvoir recevoir des palettes (18) à stocker dans le système de rayonnages ;
au moins un dispositif de capteur (16a-16d) qui est adapté pour détecter si une palette (18) posé sur la station de transfert de palettes (12) ainsi que des objets portés par la palette (18) se trouvent complètement à l'intérieur d'un contour prédéfini ; et
une unité de sortie (24) qui est couplée de manière opérationnelle à l'unité de capteur (16a-16d) et qui est adaptée pour émettre le résultat de la détection,
**caractérisé en ce que** la station de transfert de palette (12) est associée à un cadre de centrage (20) qui présente un profil (20d) se rétrécissant en forme d'entonnoir en direction d'une surface e pose (20a-20c) pour la palette.

2. Agencement selon la revendication 1, dans lequel le dispositif de capteur (16a-16d) comprend au moins une barrière lumineuse (16a-16d) et/ou au moins une caméra, par exemple une caméra 3d.

3. Agencement selon l'une des revendications 1 et 2, dans lequel le contour prédéfini en vue de dessus de la palette (18) est formé par un polygone, tel qu'un rectangle, et, le cas échéant, une hauteur admissible prédéterminée de la palette (18) et des objets portés par celle-ci.

4. Agencement selon l'une des revendications précédentes, dans lequel il comprend en outre des moyens pour détecter le poids de la palette et/ou l'espace de dégagement de la palette (18), lesquels moyens sont également couplés de manière opérationnelle à l'unité de sortie (24).

5. Agencement selon l'une des revendications précédentes, dans laquelle l'unité de sortie (24) comprend un dispositif de sortie optique qui est adapté pour afficher le résultat de détection de l'unité de détection (16a-16d) à un opérateur et qui est de préférence disposé sous la station de transfert de palettes (12).

6. Système de rayonnages, comprenant au moins une rangée de rayonnages (100a ; 106a, 106b) et au moins un dispositif d'opération de rayonnages (104) ainsi qu'au moins un agencement pour le contrôle de contour selon l'une des revendications précédentes, dont la station de transfert de palettes (12a-12d) est adaptée de telle sorte que des palettes peuvent y être déposées depuis l'extérieur du système de rayonnages, lesquelles palettes peuvent ensuite être reçues par le dispositif d'opération de rayonnages (104) pour être stockées.

7. Système de rayonnages selon la revendication 6, dans lequel la station de transfert de palettes (12a-12d) est prévue sur un bras en porte-à-faux à une extrémité longitudinale de ladite au moins une rangée d'étagères (100a ; 106a), lequel bras en porte-à-faux forme de préférence une extension d'un support d'étagères.

8. Système de rayonnages selon la revendication 6 ou 7, dans lequel une pluralité de stations de transfert de palettes (12a-12d) sont prévues, en particulier sur des bras en porte-à-faux disposés les uns au-dessus des autres à une extrémité longitudinale d'une seule rangée de rayonnages (100a ; 106a).

9. Système de rayonnage selon la revendication 8, dans lequel un dispositif de sortie optique (24) respectif est associé à chacun de la pluralité de stations de transfert de palettes.

10. Système de rayonnage selon la revendication 9, dans lequel il est prévu une pluralité de stations de transfert de palettes (12a-12d) disposées les unes au-dessus des autres et dans lequel les dispositifs de sortie optique (24) respectifs sont tous disposés en dessous de la station de transfert de palettes la plus basse (12a).

11. Système de rayonnage selon l'une des revendications 6 à 10, dans lequel il est prévu un premier type de rangée de rayonnages (106a), qui comprend au moins une station de transfert de palettes (12) à une extrémité longitudinale pour les palettes à stocker, et un deuxième type de rangée de rayonnages (106b), qui comprend au moins une station de sortie de palettes (108) à une extrémité longitudinale pour les palettes à récupérer, et dans lequel de préférence des rangées de rayonnages du premier (106a) et du deuxième (106b) type sont disposées en alternance.

12. Système de rayonnage selon l'une des revendications 6 à 11, dans lequel l'unité de sortie (24) est accouplée de manière opérationnelle à un système de gestion d'entrepôt de niveau supérieur.
